# EUROPEAN PATENT APPLICATION

(11) **EP 4 210 140 A1**
(43) Date of publication of application: **12.07.2023**
(21) Application number: 21864310.4
(22) Date of filing: 31.08.2021
(51) Int. Cl.: H01M 10/052, H01M 10/0562

(54) **ALL-SOLID-STATE SECONDARY CELL MIXTURE, ALL-SOLID-STATE SECONDARY CELL MIXTURE SHEET, METHOD FOR MANUFACTURING SAME, AND ALL-SOLID-STATE SECONDARY CELL**

(30) Priority: 01.09.2020 JP 2020146853
(71) Applicant: Daikin Industries, Ltd., Osaka-shi, Osaka 530-0001 (JP)
(72) Inventor: YAMADA, Takaya, Osaka-shi, Osaka 530-8323 (JP); YAMADA, Masahiko, Osaka-shi, Osaka 530-8323 (JP); YAMAZAKI, Shigeaki, Osaka-shi, Osaka 530-8323 (JP); TERADA, Junpei, Osaka-shi, Osaka 530-8323 (JP); FUJIWARA, Kae, Osaka-shi, Osaka 530-8323 (JP); HIRAGA, Kentarou, Osaka-shi, Osaka 530-8323 (JP); SUI, Xianwei, Osaka-shi, Osaka 530-8323 (JP)
(74) Representative: Hoffmann Eitle
(86) International application number: PCT/JP2021/031852
(87) International publication number: WO 2022/050252

(57) **Abstract**

Provided is an all-solid-state secondary battery mixture having good properties, a secondary battery electrode mixture sheet containing the all-solid-state secondary battery mixture, and a secondary battery using the all-solid-state secondary battery sheet. Also provided is a method for producing an all-solid-state secondary battery sheet containing a polytetrafluoroethylene resin having a fine fiber structure. The all-solid-state secondary battery mixture includes a solid-state electrolyte and a binder. The binder is a polytetrafluoroethylene resin, and the polytetrafluoroethylene resin has a fibrous structure with a fibril diameter (median value) of 70 nm or less. In addition, the all-solid-state secondary battery mixture sheet contains that all-solid-state secondary battery mixture.

## Description

### Technical Field

The present disclosure relates to an all-solid-state secondary battery mixture, an all-solid-state secondary battery mixture sheet and a production method thereof, and an all-solid-state secondary battery.

### Background Art

For a lithium ion secondary battery, it is common to produce an all-solid-state secondary battery sheet by coating a slurry obtained by mixing an electrode active material and a conductive aid with a binder and a solvent and then drying.

Meanwhile, a polytetrafluoroethylene resin is a polymer that readily forms fibrils, and when fibrillated is also used as a binder.

Patent Literature 1 discloses a method for producing an electrode in which polytetrafluoroethylene is fibrillated by subjecting a mixture including an active material and a polytetrafluoroethylene composite binder material to a high shear treatment with a jet mill.

### Citation List

### Patent Literature

Patent Literature 1: Japanese Translation of PCT International Application Publication No. 2017-517862

### Summary of Invention

### Technical Problem

An object of the present disclosure is to provide an all-solid-state secondary battery mixture having good properties, an all-solid-state secondary battery mixture sheet containing the mixture, and an all-solid-state secondary battery using the all-solid-state secondary battery sheet.

Another object of the present disclosure is to provide a method for producing an all-solid-state secondary battery sheet containing a polytetrafluoroethylene resin having a fine fiber structure.

### Solution to Problem

The present disclosure relates to an all-solid-state secondary battery mixture comprising a solid-state electrolyte and a binder, wherein the binder is a polytetrafluoroethylene resin, and the polytetrafluoroethylene resin has a fibrous structure with a fibril diameter (median value) of 70 nm or less.

It is preferred that the all-solid-state secondary battery mixture is for a lithium ion all-solid-state secondary battery.

It is preferred that the all-solid-state secondary battery mixture is for a sulfide-based all-solid-state secondary battery.

It is preferred that the all-solid-state secondary battery mixture is an all-solid-state secondary battery mixture obtained using a raw material composition containing a solid-state electrolyte and a binder, wherein the binder in the raw material composition is a powdered polytetrafluoroethylene resin.

It is preferred that the raw material composition is substantially free of a liquid medium.

It is preferred that the powdered polytetrafluoroethylene resin has a moisture content of 500 ppm or less.

It is preferred that the powdered polytetrafluoroethylene resin has a standard specific gravity of 2.11 to 2.20.

It is preferred that the powdered polytetrafluoroethylene resin includes 50% by mass or more of a polytetrafluoroethylene resin having a secondary particle size of 500 µm or more.

It is preferred that the powdered polytetrafluoroethylene resin includes 80% by mass or more of a polytetrafluoroethylene resin having a secondary particle size of 500 µm or more.

The present disclosure also relates to an all-solid-state secondary battery mixture sheet comprising the above-described all-solid-state battery mixture.

The present disclosure also relates to a method for producing an all-solid-state secondary battery mixture sheet comprising:
(1) applying a shear force while mixing a raw material composition including a solid-state electrolyte and a binder;
(2) forming the all-solid-state secondary battery mixture obtained in (1) into a bulk shape; and
(3) rolling the bulk-shape all-solid-state secondary battery mixture obtained in (2) into a sheet shape,
wherein the binder is a powdered polytetrafluoroethylene resin.

The present disclosure also relates to an all-solid-state secondary battery including the above-described all-solid-state secondary battery mixture sheet.

### Advantageous Effects of Invention

In the present disclosure, a battery having reduced deterioration of the solid-state electrolyte can be produced by not using a solvent when forming the all-solid-state secondary battery mixture sheet and using a low-moisture polytetrafluoroethylene resin (PTFE) powder as a binder. Further, according to the production method of the present disclosure, an all-solid-state secondary battery mixture sheet containing polytetrafluoroethylene resin having a fine fiber structure can be produced, and because a slurry is not prepared, the burden of the production process can be reduced.

### Description of Embodiments

The present disclosure will now be described in detail.

The present disclosure provides an all-solid-state secondary battery mixture that can be suitably used in an all-solid-state secondary battery, and a mixture sheet containing the same.

In the all-solid-state secondary battery mixture of the present disclosure and the mixture sheet containing the same, PTFE is used as a binder. For a conventional all-solid-state secondary battery mixture, a common method to prepare the all-solid-state secondary battery mixture is to use a resin that dissolves in a solvent, such as a copolymer of vinylidene fluoride and hexafluoropropylene, as a binder, and coat and dry a slurry containing such a binder.

It is known that when shear stress is applied to PTFE in a particulate state, the PTFE readily forms fibrils. By utilizing this property of readily forming fibrils, PTFE can be used as a binder. That is, the fibrillated PTFE entangles other powder components and the like to bind the powder components, thereby acting as a binder upon forming of the powder components.

However, even when fibrillated PTFE is used as a binder, if the fibrillation is not sufficient, a good performance cannot be exhibited when used as an all-solid-state secondary battery mixture. In the present disclosure, taking this point into consideration, the PTFE is formed into fine fibrils so as to have a fibrous structure with a fibril diameter (median value) of 70 nm or less. When such a fibrillated PTFE is used as a binder for the all-solid-state secondary battery mixture, deterioration of the solid-state electrolyte can be reduced and a good performance can be exhibited.

That is, the present disclosure has been completed based on the discovery that when PTFE is used as a binder, by using PTFE having a fine fiber structure, an all-solid-state secondary battery mixture having good properties and a mixture sheet containing the same can be obtained.

The all-solid-state secondary battery mixture of the present disclosure is obtained using a raw material composition including an electrode active material and a binder. The binder is preferably powdered PTFE. Since PTFE powder is used as a raw material instead of a PTFE water dispersion, there is little moisture derived from the raw material in the all-solid-state secondary battery mixture, and so problems due to the mixing of water do not occur. As a result, there is also the advantage that battery performance can be improved. Further, the battery can have excellent ion conductivity.

In addition, it is preferred that the above-described raw material composition is substantially free of a liquid medium. Thus, the all-solid-state secondary battery mixture of the present disclosure has the advantage that a solvent is not used in its production. In other words, in the conventional method for producing an all-solid-state secondary battery mixture, it is common to prepare a slurry in which a powder, which is a component of the all-solid-state secondary battery mixture, is dispersed by using a solvent in which a binder is dissolved, and then prepare the all-solid-state secondary battery mixture sheet by coating and drying the slurry. In this case, a solvent for dissolving the binder is used. However, the solvents capable of dissolving the binder resin that have conventionally been used are limited to specific solvents such as butyl butyrate. Such solvents degrade the solid-state electrolyte, and cause a decrease in battery performance. In addition, low-polarity solvents such as heptane are very limited in terms of the types of binder resins that they can dissolve, and they have a low flash point, making them difficult to handle.

The all-solid-state secondary battery mixture of the present disclosure has, as a constituent element, PTFE having a fibrous structure with a fibril diameter (median value) of 70 nm or less. In the present disclosure, it is important that the fibril diameter (median value) is 70 nm or less. Thus, the object of the present invention is achieved by having PTFE with a small fibril diameter be present in the all-solid-state secondary battery mixture, which acts to bind the powders of the components constituting the all-solid-state secondary battery mixture.

The fibril diameter (median value) is a value measured by the following method.
(1) Using a scanning electron microscope (Model S-4800, manufactured by Hitachi, Ltd.), an enlarged photograph (7,000x) of the all-solid-state secondary battery mixture sheet is taken to obtain an image.
(2) Two lines equidistant from each other are drawn on the image in the horizontal direction to divide the image into three equal parts.
(3) The diameter of each PTFE fiber on the upper straight line is measured at three locations, and the average value is taken as the PTFE fiber diameter. The three locations to be measured are the intersection between the PTFE fiber and the straight line, and the locations 0.5 µm above and below the intersection (PTFE primary particles not formed into fibrils are excluded).
(4) The task of (3) above is then carried out for all the PTFE fibers on the lower straight line.
(5) Starting from the first image, the all-solid-state secondary battery mixture sheet is moved 1 mm in the right direction of the screen, photographed again, and the diameter of the PTFE fibers is measured according to the above (3) and (4). This is repeated until the number of fibers measured exceeds 80, and then the measurement is terminated.
(6) The median value of the diameters of all the PTFE fibers measured above is taken as the size of the fibril diameter.

The fibril diameter (median value) is preferably 65 nm or less, and more preferably 62 nm or less. It should be noted that excessive fibril formation tends to result in loss of flexibility. Although the lower limit is not limited, from the viewpoint of strength, the lower limit is preferably not less than 15 nm, and more preferably not less than 20 nm.

Examples of the method for obtaining PTFE having the above-described fibril diameter (median value) include, but are not limited to a method including:
a step (1) of applying a shear force while mixing a raw material composition including a solid-state electrolyte and a binder;
a step (2) of forming the all-solid-state secondary battery mixture obtained in step (1) into a bulk shape; and
a step (3) of rolling the bulk-shape all-solid-state secondary battery mixture obtained in step (2) into a sheet shape.

In such a method, for example, by setting the mixing condition of the raw material composition to 1,000 rpm or less in step (1), the fibrillation of the PTFE can be advanced while maintaining flexibility, and by controlling the shear stress to be applied, the fibril diameter (median value) of the PTFE can be made 70 nm or less.

Further, it is also preferable to have after the step (3) a step (4) of applying a larger load to the obtained roll sheet and rolling into a thinner sheet. It is also preferred to repeat step (4).

In addition, after the step (3) or step (4), the fibril diameter can be adjusted by having a step (5) of coarsely crushing the obtained roll sheet, then again forming into a bulk shape and rolling into a sheet. The step (5) is preferably repeated, for example, 1 or more times and 12 or less times.

That is, the all-solid-state secondary battery mixture can be produced by applying a shear force to fibrillate the PTFE powder, which becomes entangled with the powder components such as the solid-state electrolyte. This production method is described later.

In the present disclosure, the PTFE resin is not limited, and may be a homopolymer or a copolymer that can be fibrillated.

In the case of a copolymer, examples of fluorine atom-containing monomers that are co-monomers include chlorotrifluoroethylene, hexafluoropropylene, fluoroalkylethylene, perfluoroalkylethylene, fluoroalkyl-fluorovinyl ether, and the like.

The above-described "PTFE powder" means a solid state as a powder, not a dispersed state mixed with a liquid medium. The object of the present disclosure can be suitably achieved by producing an all-solid-state secondary battery mixture using PTFE in such a state, which is a state in which a liquid medium is not present.

It is preferred that the powdered PTFE serving as the raw material for preparing the all-solid-state secondary battery mixture of the present disclosure has a moisture content of 500 ppm or less.

A moisture content of 500 ppm or less is preferred from the viewpoint of reducing deterioration of the solid-state electrolyte.

More preferably, the moisture content is 300 ppm or less.

The powdered PTFE serving as the raw material for preparing the all-solid-state secondary battery mixture of the present disclosure preferably has a standard specific gravity of 2.11 to 2.20. Having a standard specific gravity within the above range is advantageous in that an electrode mixture sheet having a high strength can be produced. The lower limit of the standard specific gravity is more preferably not less than 2.12. The upper limit of the standard specific gravity is more preferably not more than 2.19, and even more preferably not more than 2.18.

The standard specific gravity (SSG) is measured by preparing a sample according to ASTM D-4895-89, and measuring the specific gravity of the obtained sample by the water displacement method.

The powdered PTFE includes preferably 50% by mass or more, and more preferably 80% by mass or more, of polytetrafluoroethylene resin having a secondary particle size of 500 µm or more. When the PTFE having a secondary particle size of 500 µm or more is within the above range, there is an advantage that a high-strength mixture sheet can be produced.

By using PTFE with a secondary particle size of 500 µm or more, it is possible to obtain a mixture sheet with lower resistance and high toughness.

The lower limit of the secondary particle size of the powdered PTFE is more preferably 300 µm, and further preferably 350 µm. The upper limit of the secondary particle size is more preferably not more than 700 µm, and further preferably not more than 600 µm. The secondary particle size can be determined, for example, by a sieving method.

The powdered PTFE has an average primary particle size of preferably 150 nm or more because this allows an electrode mixture sheet having higher strength and excellent homogeneity to be obtained. More preferably, the average primary particle size is 180 nm or more, further preferably 210 nm or more, and particularly preferably 220 nm or more.

The larger the average primary particle size of the PTFE, the more the extrusion pressure can be suppressed and the better the formability is upon extrusion the powder. The upper limit may be 500 nm, but is not limited thereto. From the viewpoint of productivity in the polymerization step, the upper limit is preferably 350 nm.

The average primary particle size can be determined by, using an aqueous dispersion of PTFE obtained by polymerization, creating a calibration curve plotting the transmission of 550 nm incident light with respect to the unit length of the aqueous dispersion having a polymer concentration adjusted to 0.22% by mass versus the average primary particle size determined by measuring the directional diameter in a transmission-type electron micrograph, and measuring the transmission of the aqueous dispersion to be measured.

The PTFE used in the present disclosure may have a core-shell structure. Examples of PTFE having a core-shell structure include a polytetrafluoroethylene that includes in the particle a core of high molecular weight polytetrafluoroethylene and a shell of a lower molecular weight polytetrafluoroethylene or modified polytetrafluoroethylene. Examples of the modified polytetrafluoroethylene include the polytetrafluoroethylenes described in Japanese Translation of PCT International Application Publication No. 2005-527652.

Powered PTFE that satisfies each of the above-described parameters can be obtained by a conventional manufacturing method. For example, such powdered PTFE may be produced in accordance with the production methods described in International Publication No. WO 2015-080291, International Publication No. WO 2012-086710, and the like.

In the present disclosure, the lower limit of the binder content in the all-solid-state secondary battery mixture is preferably not less than 0.2% by mass, and more preferably not less than 0.3% by mass. More preferably, the lower limit is more than 1.0% by mass. The upper limit of the binder content in the all-solid-state secondary battery mixture is not more than preferably 10% by mass, and more preferably not more than 6.0% by mass. If the binder is within the above range, it is possible to form a self-supporting sheet having excellent handleability while suppressing an increase in electrode resistance.

The solid-state electrolyte used in the all-solid-state secondary battery mixture of the present disclosure may be a sulfide-based solid-state electrolyte or an oxide-based solid-state electrolyte. In particular, when using a sulfide-based solid-state electrolyte, there is an advantage in that there is flexibility.

The sulfide-based solid-state electrolyte is not limited, and may be selected from any Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x=0.6 to 0.8), Li_{4+y}Ge_{1-y}Ga_{y}S₄ (y=0.2 to 0.3), LiPSCl, LiCl, Li_{7-x-2y}PS_{6-x-y}Clₓ (0.8≤x≤1.7, 0<y≤-0.25x+0.5), and the like, or a mixture of two or more types can be used.

The sulfide-based solid-state electrolyte preferably contains lithium. Lithium-containing sulfide-based solid-state electrolytes are used in solid-state batteries that use lithium ions as carriers, and are particularly preferred for electrochemical devices having a high energy density.

The oxide-based solid-state electrolyte is preferably a solid-state electrolyte that contains an oxygen atom (O), has the ion-conducting property of a metal belonging to Group 1 or Group 2 of the Periodic Table, and has an electron insulating property.

Specific examples of the compounds include LiₓₐLa_{ya}TiO₃ [xa=0.3 to 0.7 and ya=0.3 to 0.7] (LLT), Li_{xb}La_{yb}Zr_{zb}M^{bb}_{mb}O_{nb} (M^{bb} is at least one element of Al, Mg, Ca, Sr, V, Nb, Ta, Ti, Ge, In or Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}M^{cc}_{zc}O_{nc} (M^{cc} is at least one element of C, S, Al, Si, Ga, Ge, In, or Sn, xc satisfies 0≤xc≤5, yc satisfies 0≤yc≤1, zc satisfies 0≤zc≤1, and nc satisfies 0≤nc≤6), Li_{xd}(Al, Ga)_{yd} (Ti, Ge)_{zd}Si_{ad}P_{md}O_{nd} (1≤xd≤3, 0≤yd≤2, 0≤zd≤2, 0≤ad≤2, 1≤md≤7, 3≤nd≤15), Li(_{3-2xc})M^{ee}ₓₑD^{ee}O (xe represents a number of 0 or more and 0.1 or less, and M^{ee} represents a divalent metal atom; D^{ee} represents a halogen atom or a combination of two or more halogen atoms), Li_{xf}Si_{yf}O_{zf} (1≤xf≤5, 0≤yf≤3, 1≤zf≤10), Li_{xg}S_{yg}O_{zg} (1≤xg≤3, 0≤yg≤2, 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w satisfies w<1), Li_{3.5}Zn_{0.25}GeO₄ having a lithium super ionic conductor (LISICON)-type crystal structure, La_{0.51}Li_{0.34}TiO_{2.94} or La_{0.55}Li_{0.35}TiO₃ having a perovskite-type crystal structure, LiTi₂P₃O₁₂ having a natrium super ionic conductor (NASICON) -type crystal structure, Li_{1+xh+yh} (Al, Ga)ₓₕ(Ti, Ge)₂₋ₓₕSi_{yh}P_{3-yh}O₁₂ (0≤xh≤1, 0≤yh≤1), Li₇La₃Zr₂O₁₂ (LLZ) having a garnet-type crystal structure. Further, ceramic materials in which an element is substituted into the LLZ are also known. Examples of such ceramic materials include LLZ-based ceramic materials in which at least one of Mg (magnesium) and A (A is at least one element selected from the group consisting of Ca (calcium), Sr (strontium), and Ba (barium)) is substituted into the LLZ. In addition, phosphorus compounds containing Li, P, and O are also desirable. Examples thereof include lithium phosphate (Li₃PO₄), LiPON in which some of oxygen atoms in lithium phosphate are substituted with nitrogen, LiPOD¹ (D¹ is at least one element selected from Ti, V, Cr, Mn, Fe, Co, Ni, Cu, Zr, Nb, Mo, Ru, Ag, Ta, W, Pt, Au, or the like), and the like. It is also possible to preferably use LiA¹ON (A¹ represents at least one element selected from Si, B, Ge, Al, C, Ga, or the like) and the like.

Specific examples include Li₂O-Al₂O₃-SiO₂-P₂O₅-TiO₂-GeO₂, Li₂O-Al₂O₃-SiO₂-P₂O₅-TiO₂ and the like.

The oxide-based solid-state electrolyte preferably contains lithium. Lithium-containing oxide-based solid-state electrolytes are used in solid-state batteries that use lithium ions as carriers, and are particularly preferred for electrochemical devices having a high energy density.

The oxide-based solid-state electrolyte is preferably an oxide having a crystal structure. Oxides having a crystal structure are particularly preferred in terms of having a good Li-ion-conducting property.

Examples of oxides having a crystal structure include perovskite type (La_{0.51}Li_{0.34}TiO_{2.94} etc.), NASICON type (Li_{1.3}Al_{0.3}Ti_{1.7}(PO₄)₃ etc.), garnet type (Li₇La₃Zr₂O₁₂ (LLZ), etc.), and the like. Among them, the NASICON type is preferable.

The volume average particle size of the oxide-based solid-state electrolyte is not limited, but is preferably 0.01 µm or more, and more preferably 0.03 µm or more. The upper limit is preferably not more than 100 µm, and more preferably not more than 50 µm. The average particle size of the oxide-based solid-state electrolyte particles is measured by the following procedure. A dispersion is prepared by diluting the oxide-based solid-state electrolyte particles with water (heptane for materials unstable in water) to 1% by mass in a 20 ml sample bottle. Ultrasonic waves of 1 kHz are applied on the diluted dispersion sample for 10 minutes, and the test is immediately carried out after that. Using the dispersion sample, a laser diffraction/scattering particle size distribution analyzer LA-920 (manufactured by HORIBA) is used to acquire data 50 times using a quartz cell for measurement at a temperature of 25°C to obtain the volume average particle size. For other detailed conditions, refer to the description of JIS Z8828:2013 "Particle size analysis-dynamic light scattering method" if necessary. Five samples are prepared for each level and the average value is taken.

The all-solid-state secondary battery mixture of the present disclosure is particularly suitable for a lithium-ion all-solid-state secondary battery.

Further, the all-solid-state secondary battery mixture of the present disclosure is also suitable for a sulfide-based all-solid-state secondary battery.

The all-solid-state secondary battery mixture of the present disclosure is typically used in sheet form when used in an all-solid-state secondary battery.

The all-solid-state secondary battery mixture sheet of the present disclosure can be a sheet for a positive electrode or a sheet for a negative electrode. Further, it can be a sheet for a solid-state electrolyte layer. Among these, when used as an electrode sheet, the all-solid-state secondary battery mixture sheet of the present disclosure further contains active material particles. The active material particles can be used as a positive electrode active material or a negative electrode active material. The all-solid-state secondary battery sheet of the present disclosure can be more suitably used as a sheet for a positive electrode using a positive electrode active material. Moreover, when used as an electrode sheet, the all-solid-state secondary battery sheet of the present disclosure may optionally contain a conductive aid.

The electrode active material, conductive aid, and the like will be described below.

### (Electrode active material)

When the all-solid-state secondary battery mixture sheet of the present disclosure is used as a sheet for a positive electrode, the all-solid-state secondary battery mixture sheet includes a positive electrode active material. As the positive electrode active material, a positive electrode active material known as a positive electrode active material for solid-state batteries can be employed. In particular, it is preferable to use a positive electrode active material that can occlude and release lithium ions.

The positive electrode active material is not limited as long as it can electrochemically occlude and release alkali metal ions. For example, a material containing an alkali metal and at least one transition metal is preferred. Specific examples include alkali metal-containing transition metal composite oxides, alkali metal-containing transition metal phosphate compounds, conductive polymers, and the like.

Among them, as the positive electrode active material, an alkali metal-containing transition metal composite oxide that produces a high voltage is particularly preferable. Examples of the alkali metal ions include lithium ions, sodium ions, and potassium ions. In a preferred embodiment, the alkali metal ions may be lithium ions. That is, in this embodiment, the alkali metal ion secondary battery is a lithium ion secondary battery.

Examples of the alkali metal-containing transition metal composite oxide include:
an alkali metal-manganese spinel composite oxide represented by the formula:

   MₐMn_{2-b}M¹_{b}O₄
wherein M is at least one metal selected from the group consisting of Li, Na and K, 0.9≤a; 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge,
an alkali metal-nickel composite oxide represented by the formula:

   MNi_{1-c}M²cO₂
wherein M is at least one metal selected from the group consisting of Li, Na and K, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge, or
an alkali metal-cobalt composite oxide represented by the formula:

   MCo_{1-d}M³_{d}O₂
wherein M is at least one metal selected from the group consisting of Li, Na and K, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge. In the above, M is preferably one metal selected from the group consisting of Li, Na and K, more preferably Li or Na, and further preferably Li.

Among these, from the viewpoint of being able to provide a secondary battery with high energy density and high output, MCoO₂, MMnO₂, MNiO₂, MMn₂O₄, MNi_{0.8}Co_{0.15}Al_{0.05}O₂, MNi_{1/3}Co_{1/3}Mn_{1/3}O₂ and the like are preferable, and a compound represented by the following general formula (3) is preferred:

MNiₕCoᵢMnⱼM⁵ₖO₂ (3)

wherein M is at least one metal selected from the group consisting of Li, Na and K; M⁵ represents at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound include compounds represented by the following formula (4):

MₑM⁴_{f}(PO₄)_{g} (4)

wherein M is at least one metal selected from the group consisting of Li, Na and K, M⁴ is at least one selected from the group consisting of V, Ti, Cr, Mn, Fe, Co, Ni, and Cu, 0.5≤e≤3, 1≤f≤2, and 1≤g≤3. In the above, M is preferably one metal selected from the group consisting of Li, Na and K, more preferably Li or Na, and further preferably Li.

The transition metal of the lithium-containing transition metal phosphate compound is preferably V, Ti, Cr, Mn, Fe, Co, Ni, Cu, or the like. Specific examples include iron phosphates such as LiFePO₄, Li₃Fe₂(PO₄)₃, and LiFeP₂O₇, cobalt phosphates such as LiCoPO₄, and lithium-containing transition metal phosphate compounds in which a part of the transition metal atoms that are the main component of these lithium-transition metal phosphate compounds is replaced with another element such as Al, Ti, V, Cr, Mn, Fe, Co, Li, Ni, Cu, Zn, Mg, Ga, Zr, Nb, or Si.

The lithium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃ (where M is at least one metal selected from the group consisting of Li, Na and K) and the like. In particular, positive electrode active materials such as M₂MnO₃ and MNi_{0.5}Mn_{1.5}O₂ are preferable from the viewpoint that the crystal structure does not collapse when the secondary battery is operated at a voltage exceeding 4.4 V or 4.6 V or higher. Therefore, electrochemical devices such as secondary batteries using a positive electrode material including the positive electrode active material exemplified above are preferable because even when they are stored at high temperatures, they are less likely to suffer a decrease in remaining capacity, less likely to undergo a change in resistance increase rate, and do not suffer from a decrease in battery performance even when operated at a high voltage.

Examples of other positive electrode active materials include a solid solution material of M₂MnO₃ with MM⁶O₂ (where M is at least one metal selected from the group consisting of Li, Na and K, and M⁶ is a transition metal such as Co, Ni, Mn, or Fe), and the like.

Examples of the solid solution material include alkali metal-manganese oxides represented by the general formula Mx[Mn_{(1-y)}M⁷_{y}]O_{z}. Here, M is at least one metal selected from the group consisting of Li, Na and K, and M⁷ includes at least one metal element other than M and Mn and one or two or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3. Among them, a manganese-containing solid solution material such as Li_{1.2}Mn_{0.5}Co_{0.14}Ni_{0.14}O₂ in which LiNiO₂ or LiCoO₂ is dissolved as a solid solution in a base of Li₂MnO₃ is preferable from the viewpoint that an alkali metal ion secondary battery having a high energy density can be provided.

Further, it is preferable to include lithium phosphate in the positive electrode active material because continuous charging characteristics are improved. Although the use of lithium phosphate is not limited, it is preferable to use a mixture of the above-described positive electrode active material and lithium phosphate. The lower limit of the amount of lithium phosphate used is preferably not less than 0.1% by mass, more preferably not less than 0.3% by mass, and further preferably not less than 0.5% by mass, based on the total of the positive electrode active material and lithium phosphate. The upper limit is preferably not more than 10% by mass, more preferably not more than 8% by mass, and further preferably not more than 5%, based on the total of the positive electrode active material and lithium phosphate.

Examples of the conductive polymer include p-doping type conductive polymers and n-doping type conductive polymers. Examples of the conductive polymer include polyacetylene-based polymers, polyphenylene-based polymers, heterocyclic polymers, ionic polymers, ladder and network polymers, and the like.

The positive electrode active material may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the surface of the positive electrode active material by, for example, a method of dissolving or suspending the substance in a solvent, impregnating or adding it to the positive electrode active material, and then drying, or a method of dissolving or suspending a precursor of the surface-attached substance in a solvent, impregnating or adding it to the positive electrode active material, and then causing the surface-attached substance to react by heating or the like, or a method of attaching the substance to the surface of the positive electrode active material by sintering the substance at the same time as adding it to a precursor of the positive electrode active material. In addition, in the case of attaching carbon, a method of mechanically attaching carbonaceous matter in the form of activated carbon or the like later can also be used.

Based on the mass relative to the positive electrode active material, the lower limit of the amount of the surface-attached substance is preferably not less than 0.1 ppm, more preferably not less than 1 ppm, and further preferably not less than 10 ppm, and the upper limit is preferably not more than 20%, more preferably not more than 10%, and further preferably not more than 5%. The surface-attached substance can inhibit an oxidation reaction between the solid-state electrolyte at the surface of the positive electrode active material, which enables battery life to be improved. If the attached amount is too small, the effect may not be sufficiently exhibited, and if the attached amount is too large, the resistance may increase due to absorption/desorption of the lithium ions being inhibited.

Examples of the shape of the particles of the positive electrode active material include conventionally used shapes, such as mass-shaped, polyhedral, spherical, oval, plate-shaped, needle-shaped, and columnar-shaped. Further, primary particles may be aggregated to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is lower than this lower limit, the amount of dispersion medium required for forming the positive electrode active material layer may increase, the required amounts of the conductive material and the binder may increase, the filling ratio of the positive electrode active material to the positive electrode active material layer may be limited, and the battery capacity may be limited. By using a complex oxide powder with a high tapped density, a high density positive electrode active material layer can be formed. Generally, the higher the tapped density, the better. Although there is no upper limit, if the tapped density is too large, the diffusion of lithium ions in the positive electrode active material layer using the solid-state electrolyte as a medium becomes rate-determining, and the load characteristics tend to deteriorate. Therefore, the upper limit is preferably not more than 4.0 g/cm³, more preferably not more than 3.7 g/cm³, and further preferably not more than 3.5 g/cm³.

In the present disclosure, the tapped density is determined as the powder filling density (tapped density) g/cm³ when 5 to 10 g of the positive electrode active material powder is placed in a 10 ml glass graduated cylinder and tapped 200 times with a stroke of about 20 mm.

The median diameter d50 of the particles of the positive electrode active material (secondary particle size when primary particles aggregate to form secondary particles) is preferably 0.3 µm or more, more preferably 0.5 µm or more, further preferably 0.8 µm or more, and most preferably 1.0 µm or more, and is preferably 30 µm or less, more preferably 27 µm or less, further preferably 25 µm or less, and most preferably 22 µm or less. If the median diameter d50 is less than this lower limit, it may not be possible to obtain a high tapped density product, and if median diameter d50 exceeds the upper limit, it takes time for the lithium to diffuse within the particles, which may result in problems such as a decrease in battery performance and the occurrence of streaks when forming the positive electrode of the battery, that is, when preparing a slurry of the active material, conductive material, binder, and the like with a solvent and coating the slurry as a thin film. Here, by mixing two or more types of the above-described positive electrode active material having different median diameters d50, the filling property at the time of forming the positive electrode can be further improved.

In addition, in the present disclosure, the median diameter d50 is measured by a known laser diffraction/scattering particle size distribution measurement apparatus. When the LA-920 manufactured by HORIBA is used as a particle size distribution analyzer, a 0.1% by mass sodium hexametaphosphate aqueous solution is used as a dispersion medium for measurement, and the measurement is carried out by setting a measurement refractive index of 1.24 after performing ultrasonic dispersion for 5 minutes.

In a case in which primary particles aggregate to form secondary particles, the average primary particle size of the positive electrode active material is preferably 0.05 µm or more, more preferably 0.1 µm or more, and further preferably 0.2 µm or more. The upper limit is preferably not more than 5 µm, more preferably not more than 4 µm, further preferably not more than 3 µm, and most preferably not more than 2 µm. If the upper limit is exceeded, it is difficult to form spherical secondary particles, which adversely affects the powder filling property and greatly reduces the specific surface area, and as a result there may be an increased possibility of a decrease in battery performance such as output characteristics. Conversely, if the average primary particle size is lower than the above-described lower limit, problems such as poor reversibility of charge/discharge may occur due to underdevelopment of crystals.

In addition, in the present disclosure, the average primary particle size of the positive electrode active material is measured by observation using a scanning electron microscope (SEM). Specifically, the average primary particle size is determined by, in a photograph at a magnification of 10,000 times, determining the value of the maximum length of a section formed by the left and right boundary lines of the primary particles with respect to a straight line in the horizontal direction for 50 arbitrary primary particles, and taking the average value thereof.

The BET specific surface area of the positive electrode active material is preferably 0.1 m²/g or more, more preferably 0.2 m²/g or more, and further preferably 0.3 m²/g or more. The upper limit is preferably not more than 50 m²/g, more preferably not more than 40 m²/g, and further preferably not more than 30 m²/g. If the BET specific surface area is smaller than this range, battery performance tends to decrease. If the BET specific surface area is larger than this range, it is harder for the tapped density to increase, and problems in the coating property when forming the positive electrode active material layer can tend to occur.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large lithium ion secondary battery for a hybrid automobile or a distributed power source, a high output is required, and it is preferred that the particles of the positive electrode active material are mainly secondary particles.

The particles of the positive electrode active material preferably include 0.5 to 7.0% by volume of fine particles having an average secondary particle size of 40 µm or less and an average primary particle size of 1 µm or less. By containing fine particles with an average primary particle size of 1 µm or less, the contact area with the solid-state electrolyte increases, so the diffusion of lithium ions between the sheet for the all-solid-state secondary battery and the solid-state electrolyte can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Li source such as LiOH, Li₂CO₃, or LiNOs is added, and then sintering is carried out at a high temperature to obtain the active material.

To produce the positive electrode, the above-described positive electrode active material may be used alone, or two or more types having different compositions may be used in any combination or ratio. Preferred combinations in this case include a combination of LiCoO₂ and a ternary system such as LiNi_{0.33}Co_{0.33}Mn_{0.33}O₂, a combination of LiCoO₂ and LiMn₂O₄ or a material in which a part of the Mn are replaced with another transition metal or the like, or a combination of LiFePO₄ and LiCoO₂ or a material in which a part of the Co are replaced with another transition metal or the like.

From the viewpoint of high battery capacity, the content of the positive electrode active material in the positive electrode mixture is preferably 50 to 99.5% by mass, and more preferably 80 to 99% by mass.

Further, the content of the positive electrode active material is preferably 80% by mass or more, more preferably 82% by mass or more, and particularly preferably 84% by mass or more. The upper limit is preferably not more than 99% by mass, and more preferably not more than 98% by mass. If the content of the positive electrode active material in the positive electrode mixture is low, the electric capacity may be insufficient. Conversely, if the content is too high, the strength of the positive electrode may be insufficient.

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

To increase the capacity of the obtained all-solid-state secondary battery mixture sheet, the content of the negative electrode active material in the all-solid-state secondary battery mixture sheet is preferably 40% by mass or more, more preferably 50% by mass or more, and particularly preferably 60% by mass or more. The upper limit is preferably not more than 99% by mass, and more preferably not more than 98% by mass.

### (Conductive aid)

As the conductive aid, any known conductive material can be used. Specific examples include metal materials such as copper and nickel, and carbon materials, for example, graphite such as natural graphite and artificial graphite, carbon black such as acetylene black, ketjen black, channel black, furnace black, lamp black, and thermal black, and amorphous carbons such as needle coke, carbon nanotubes, fullerenes, and VGCF. One type of these may be used alone, or two or more types may be used in any combination or ratio.

The conductive aid is used such that it has a content in the electrode active material layer of usually 0.01% by mass or more, preferably 0.1% by mass or more, and more preferably 0.5% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Other components)

The all-solid-state secondary battery mixture sheet may further include a thermoplastic resin.

Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually 3.0% by mass or less, preferably 2.5% by mass or less, and more preferably 2.0% by mass or less. By adding a thermoplastic resin, the mechanical strength of the electrode can be improved. If this range is exceeded, the proportion of the active material in the electrode mixture will decrease, which may cause problems such as a decrease in battery capacity and an increase in resistance between active materials.

In the all-solid-state secondary battery mixture sheet of the present disclosure, as a proportion of the binder in the all-solid-state secondary battery mixture sheet, the binder content is usually 0.1% by mass or more, preferably 0.3% by mass or more, and more preferably 0.5% by mass or more, and is usually 80% by mass or less, preferably 60% by mass or less, more preferably 40% by mass or less, and most preferably 20% by mass or less. If the binder proportion is too low, the active material cannot be retained sufficiently in the all-solid-state secondary battery mixture sheet, and the mechanical strength of the all-solid-state secondary battery mixture sheet is insufficient, which may cause a battery performance such as cycle characteristics to worsen. On the other hand, if the binder proportion is too high, this may lead to a decrease in battery capacity and electric conductivity.

### (Production method)

The method for producing the all-solid-state secondary battery mixture sheet of the present disclosure is not limited, and an example of a specific method thereof is as follows.

The all-solid-state secondary battery mixture sheet of the present disclosure can be obtained by a method for producing an electrode mixture sheet for a secondary battery having:
a step (1) of applying a shear force while mixing a raw material composition including a solid-state electrolyte and a binder;
a step (2) of forming the all-solid-state secondary battery mixture obtained in step (1) into a bulk shape; and
a step (3) of rolling the bulk-shape all-solid-state secondary battery mixture obtained in step (2) into a sheet shape.

At the stage of applying a shear force while mixing the raw material composition in step (1), the obtained all-solid-state secondary battery mixture is present in an undetermined form in which the solid-state electrolyte, binder, and the like are simply mixed. Examples of specific mixing methods include methods of mixing using a W-type mixer, a V-type mixer, a drum-type mixer, a ribbon mixer, a conical screw-type mixer, a single-screw kneader, a twin-screw kneader, a mix-muller, an agitating mixer, a planetary mixer, and the like.

In step (1), the mixing conditions may be appropriately set in terms of rotation speed and mixing time. For example, the number of revolutions is preferably 1,000 rpm or less. The number of revolutions is in the range of preferably 10 rpm or more, more preferably 15 rpm or more, and further preferably 20 rpm or more, and is in the range of preferably 900 rpm or less, more preferably 800 rpm or less, and further preferably 700 rpm or less. If the number of rotations is less than the above range, the mixing takes time, which affects productivity. On the other hand, if the number of rotations exceeds the above range, excessive fibrillation may occur, resulting in an electrode mixture sheet with inferior strength.

In step (2), forming into a bulk shape means forming the all-solid-state secondary battery mixture into one mass.

Specific methods of forming into a bulk shape include extrusion, press forming, and the like.

Further, the term "bulk shape" does not specify a specific shape, and the shape may be in any form as a single mass, including a rod shape, a sheet shape, a spherical shape, a cubic shape, and the like. As for the size of the mass, it is preferable that the diameter or the minimum size of the cross section is 10,000 µm or more, and more preferably 20,000 µm or more.

Examples of the specific rolling method in step (3) include a method of rolling using a roll press machine, a flat plate press machine, a calender roll machine, or the like.

Moreover, it is also preferable to have, after the step (3), a step (4) of applying a larger load to the obtained roll sheet and rolling it into a thinner sheet. It is also preferable to repeat step (4). In this way, the flexibility is improved by rolling the sheet little by little in stages instead of thinning the roll sheet all at once.

The number of times that step (4) is carried out is preferably 2 or more and 10 or less, and more preferably 3 or more and 9 or less.

A specific rolling method is to, for example, rotate two or a plurality of rolls and pass the roll sheet between the rolls to form a thinner sheet.

Further, from the viewpoint of adjusting the fibril diameter, it is preferable to have, after step (3) or step (4), a step (5) of coarsely crushing the roll sheet, then again forming into a bulk shape, and rolling into a sheet. It is also preferable to repeat step (5). The number of times that step (5) is carried out is preferably 1 time or more and 12 times or less, and more preferably 2 times or more and 11 times or less.

In step (5), examples of the specific method of coarsely crushing and forming the roll sheet into a bulk shape include a method of folding the roll sheet, a method of forming into a rod or thin sheet shape, a method of chipping, and the like. In the present disclosure, "coarsely crush" means to change the form of the roll sheet obtained in step (3) or step (4) into another form for rolling into a sheet shape in the next step, and may include a case of simply folding a roll sheet.

Step (4) may be performed after step (5), or may be performed repeatedly.

Further, uniaxial stretching or biaxial stretching may be carried out in step (2) as well as steps (3), (4), and (5).

In addition, the fibril diameter (median value) can also be adjusted by the degree of coarse crushing in step (5) .

In the above steps (3), (4), and (5), the roll rate is preferably in the range of 10% or more, and more preferably 20% or more, and is preferably in the range of 80% or less, more preferably 65% or less, and further preferably 50% or less. If the roll rate is lower than the above range, the rolling takes time as the number of rolls increases, which affects productivity. On the other hand, if the roll rate exceeds the above range, fibrillation may proceed excessively, which may result in an electrode mixture sheet having inferior strength and flexibility.

Here, the roll rate refers to the rate of decrease in the thickness of the sample after rolling with respect to the thickness before rolling. The sample before rolling may be a raw material composition in a bulk shape or a raw material composition in a sheet shape. The thickness of the sample refers to the thickness in the direction in which a load is applied during rolling.

As described above, PTFE powder is fibrillated by applying a shearing force. In order to have a fibrous structure with a fibril diameter (median value) of 70 nm or less, if the shear stress is excessive, excessive fibrillation may proceed, which impairs flexibility. Further, if shear stress is weak, strength may not be sufficient. For this reason, during mixing and rolling, in the above range, the resin is rolled and stretched into a sheet by applying an appropriate shear stress to the PTFE to promote fibrillation, whereby a fibrous structure with a fibril diameter (median value) of 70 nm can be obtained.

As described above, the all-solid-state secondary battery mixture sheet of the present disclosure can be either a sheet for a positive electrode or a sheet for a negative electrode. When used as a mixture sheet for a positive electrode or a sheet for a negative electrode, in the production of the all-solid-state secondary battery mixture sheet, the positive electrode active material or negative electrode active material may be mixed with the solid-state electrolyte and binder.

The positive electrode and negative electrode are described below.

### (Positive electrode)

In the present disclosure, it is preferable that the positive electrode is constructed from a current collector and the above-described sheet for a positive electrode.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape.

The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

Further, from the viewpoint of reducing the electrical contact resistance between the current collector and the positive electrode mixture sheet, it is preferable to coat the surface of the current collector with a conductive aid. Examples of the conductive aid include carbon and noble metals such as gold, platinum, and silver.

The positive electrode may be produced according to a conventional method. For example, a method of laminating the sheet for a positive electrode and the current collector with an adhesive between them and drying the laminate can be used.

The density of the sheet for a positive electrode is preferably 2.0 g/cm³ or more, more preferably 2.1 g/cm³ or more, and further preferably 2.3 g/cm³ or more, and preferably 4.0 g/cm³ or less, more preferably 3.9 g/cm³ or less, and further preferably 3.8 g/cm³ or less. If the density exceeds this range, the electric conductivity between the active materials decreases, the battery resistance increases, and a high output may not be obtained. If the density is lower than this range, the sheet for a positive electrode may be hard, tend to crack, have a low active material content, and obtained battery may have a low capacity.

The thickness of the positive electrode is not limited, but from the viewpoint of a high capacity and a high output, the thickness of the mixture sheet after subtracting the thickness of the current collector is, as the lower limit for one side of the current collector, preferably 10 µm or more, and more preferably 20 µm or more, and preferably 500 µm or less, and more preferably 450 µm or less.

The positive electrode may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### (Negative electrode)

In the present disclosure, it is preferable that the negative electrode is constructed from a current collector and the above-described sheet for a negative electrode.

Examples of the material of the current collector for the negative electrode include metals such as copper, nickel, titanium, tantalum, stainless steel, and metal materials such as alloys thereof, and carbon materials such as carbon cloth and carbon paper. Among them, a metal material, particularly of copper, nickel, or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The metal foil may be appropriately formed into a mesh shape. The thickness of the metal foil is arbitrary, but is usually 1 µm or more, preferably 3 µm or more, and more preferably 5 µm or more, and usually 1 mm or less, preferably 100 µm or less, and more preferably 50 µm or less. If the metal foil is thinner than this range, it may lack the strength required as a current collector. Conversely, if the metal foil is thicker than this range, handleability may be impaired.

The negative electrode may be produced according to a conventional method. For example, a method of laminating the sheet for a negative electrode and the current collector with an adhesive between them and drying the laminate can be used.

The density of the sheet for a negative electrode is preferably 1.3 g/cm³ or more, more preferably 1.4 g/cm³ or more, and further preferably 1.5 g/cm³ or more, and preferably 2.0 g/cm³ or less, more preferably 1.9 g/cm³ or less, and further preferably 1.8 g/cm³ or less. If the density exceeds this range, the penetration of the solid-state electrolyte near the interface between the current collector and the active material decreases, resulting in poor charge/discharge characteristics, especially at high current densities, and a high power output may not be obtained. On the other hand, if the density is lower than this range, the electric conductivity between the active materials decreases, the battery resistance increases, and a high output may not be obtained.

The thickness of the negative electrode is not limited, but from the viewpoint of a high capacity and a high output, the thickness of the mixture sheet after subtracting the thickness of the metal foil of the current collector is, as the lower limit for one side of the current collector, preferably 10 µm or more, and more preferably 20 µm or more, and preferably 500 µm or less, and more preferably 450 µm or less.

### (All-solid-state secondary battery)

The present disclosure also relates to an all-solid-state secondary battery using the above-described all-solid-state secondary battery mixture sheet.

The all-solid-state secondary battery is preferably a lithium ion battery. Further, the all-solid-state secondary battery is preferably a sulfide-based all-solid-state secondary battery.

The all-solid-state secondary battery of the present disclosure is an all-solid-state secondary battery including a positive electrode, a negative electrode, and a solid-state electrolyte layer provided between the positive electrode and the negative electrode. The positive electrode, the negative electrode, and the solid-state electrolyte layer contain a sheet for a positive electrode, a sheet for a negative electrode, or a solid-state electrolyte layer sheet, which are the all-solid-state secondary battery mixture sheet of the present disclosure as described above. In addition, in the all-solid-state secondary battery of the present disclosure, something other than the all-solid-state secondary battery mixture sheet of the present disclosure may be used for a part of the positive electrode, the negative electrode, and the solid-state electrolyte layer.

The laminated structure of the all-solid-state secondary battery in the present disclosure includes a positive electrode including the sheet for a positive electrode and a positive electrode current collector, a negative electrode including the sheet for a negative electrode and a negative electrode current collector, and a sulfide-based solid-state electrolyte layer sandwiched between the positive electrode and the negative electrode.

The separator and the battery case used in the all-solid-state secondary battery according to the present disclosure will be described in detail below.

### (Separator)

The all-solid-state secondary battery of the present disclosure may have a separator between the positive electrode and the negative electrode. Examples of the separator include a porous membrane such as polyethylene and polypropylene, a nonwoven fabric made of resin such as polypropylene, a nonwoven fabric such as a glass fiber nonwoven fabric, and the like.

### (Battery design)

The all-solid-state secondary battery of the present disclosure may further include a battery case. The shape of the battery case used in the present disclosure is not limited as long as it can accommodate the above-described positive electrode, negative electrode, electrolyte layer for a sulfide-based solid-state battery, and the like, but specific examples can include a cylindrical shape, a rectangular shape, a coin shape, a laminate, and the like.

The all-solid-state secondary battery of the present disclosure may be produced by, for example, first laminating the positive electrode, the solid-state electrolyte layer sheet, and the negative electrode in this order, and then pressing to form an all-solid-state secondary battery.

It is preferable to use the all-solid-state secondary battery mixture sheet of the present disclosure because this enables an all-solid-state secondary battery to be produced with less moisture in the system, and an all-solid-state secondary battery with a good performance can be obtained.

### [Examples]

Hereinafter, the present disclosure will be specifically described based on examples.

In the following examples, "parts" and "%" represent "parts by mass" and "% by mass", respectively, unless otherwise specified.

### [Production Example 1]

At the point when 367 g of TFE (35.6% by mass with respect to the total polymerization amount of TFE of 1032 g) was consumed from the start of polymerization, an aqueous solution of 12.0 mg of hydroquinone as a radical scavenger dissolved in 20 ml of water was charged under pressure with TFE (concentration 4.0 ppm with respect to the aqueous medium). Polymerization was continued thereafter, and when the polymerized amount of TFE reached 1,000 g from the start of polymerization, the supply of TFE was stopped, gas in the system was immediately released to achieve normal pressure, the polymerization reaction ended, and an aqueous dispersion of polytetrafluoroethylene (solid content 31.2% by mass) was obtained. The resulting aqueous dispersion of polytetrafluoroethylene was diluted to a solid content concentration of 15%, and gently stirred in a container equipped with a stirrer in the presence of nitric acid to solidify the polytetrafluoroethylene. The solidified polytetrafluoroethylene was separated and dried at 160°C for 18 hours to obtain powdered PTFE-1.

### [Production Example 2]

Powdered PTFE-2 was obtained by referring to Production Example 3 of International Publication No. WO 2015-080291.

### [Production Example 3]

Powdered PTFE-3 was obtained by referring to Production Example 1 of International Publication No. WO 2012/086710.

### [Production Example 4]

Powdered PTFE-4 was obtained by referring to Reference Example 1 of International Publication No. WO 2012-063622.

The physical properties of the produced PTFE are shown in Table 1.

**[Table 1]**

| Produced PTFE | Standard specific gravity | Moisture content after drying (ppm) |
|---|---|---|
| PTFE-1 | 2.16 | <250 |
| PTFE-2 | 2.15 | <250 |
| PTFE-3 | 2.16 | <250 |
| PTFE-4 | 2.19 | <250 |

### (Example 1)

A sulfide-based solid-state electrolyte (0.75 Li₂S/0.25 P₂S₅) and the powdered PTFE-1 were weighed and stirred in a mortar at 200 rpm for 1 hour to obtain a mixture.

It is noted that the powdered PTFE-1 that was used had been dried in a vacuum dryer at 50°C for 1 hour. The powdered PTFE had been sieved in advance using a stainless steel sieve with an opening of 500 µm, and the material remaining on the sieve was used. The solid content was adjusted to a mass ratio of solid-state electrolyte:binder=95:5.

The resulting mixture was formed into a bulk shape and rolled into a sheet.

Then, a step coarsely crushing the roll sheet obtained in the previous step by folding it in two, forming again into a bulk shape, and then rolling into a sheet shape using a metal roll on a flat plate to form fibrils was repeated four times. After that, the sheet was further rolled to obtain a sheet-shaped solid-state electrolyte layer with a thickness of 500 µm. Further, the sheet-shaped solid-state electrolyte layer was cut, put into a press, and rolled. The thickness was adjusted by repeatedly applying a load of 5 kN. The gap was adjusted so that the thickness of the final solid-state electrolyte layer was 150 µm. It is noted that the above operation was performed in an Ar glove box (dew point of about -80°C). The first roll rate was the largest at 39%.

### (Examples 2, 3, 4)

Solid-state electrolyte layers were produced in the same manner as in Example 1 except that the powdered PTFEs shown in Table 2 were used.

### (Example 5)

A solid-state electrolyte layer was produced in the same manner as in Example 1 except that the powdered PTFE shown in Table 2 was not sieved.

### (Comparative Example 1)

A sulfide-based solid-state electrolyte (0.75 Li₂S/0.25 P₂S₅) and the powdered PTFE shown in Table 2 were weighed and stirred in a mortar at 200 rpm for 1 hour to obtain a mixture.

It is noted that the powdered PTFE that was used had been dried in a vacuum dryer at 50°C for 1 hour.

The solid content was adjusted to a mass ratio of solid-state electrolyte:binder=95:5.

The resulting mixture was formed into a bulk shape and rolled into a sheet.

Then, a step coarsely crushing the roll sheet obtained in the previous step by folding it in two, forming again into a bulk shape, and then rolling into a sheet shape using a metal roll on a flat plate to form fibrils was repeated four times.

After that, the sheet was further rolled to obtain a sheet-shaped solid-state electrolyte layer with a thickness of 500 µm. Further, the sheet-shaped solid-state electrolyte layer was cut, put into a press, and rolled. The thickness was adjusted by repeatedly applying a load of 8 kN. The gap was adjusted so that the thickness of the final solid-state electrolyte layer was 150 µm. It is noted that the above operation was performed in an Ar glove box (dew point of about -80°C). The first roll rate was the largest at 61%.

### (Comparative Example 2)

A sheet-shaped solid-state electrolyte layer was produced in the same manner as in Comparative Example 1 except that the powdered PTFE shown in Table 2 was used.

### (Reference Example 1)

A VDF:HFP copolymer was prepared as a binder, added to butyl butyrate (manufactured by Kishida Chemical Co., Ltd.), and the resulting mixture was stirred with a mix rotor to prepare a binder solution. Here, based on 100% by mass of the total binder solution, the solution contained 5% by mass of the binder. A sulfide-based solid-state electrolyte (0.75 Li₂S/0.25 P₂S₅) was added to the binder solution, ultrasonic waves were applied using an ultrasonic homogenizer to obtain a "slurry for solid-state electrolyte layer" in which the sulfide-based solid-state electrolyte and the binder were dispersed. The solid content was adjusted to a mass ratio of solid-state electrolyte:binder=95:5. The finally obtained slurry had a solid content ratio of 68% by mass. The prepared electrolyte slurry was coated onto a peelable substrate using a doctor blade and dried. After that, pressing was performed so as to have the same density as in Example 1, and solid-state electrolyte pellets were produced. The above operation was performed in an Ar glove box (dew point of about -80°C).

Each test was carried out as follows.

### [Measurement of moisture content]

The powdered PTFE was dried in a vacuum dryer at 50°C for 1 hour before use. Using a Karl Fischer moisture meter (ADP-511/MKC-510N, manufactured by Kyoto Electronics Industry Manufacturing Co., Ltd.) equipped with a boat-type moisture vaporizer, the moisture content of the PTFE after the vacuum drying was measured by heating to 210°C with the moisture vaporizer and measuring the vaporized moisture. Nitrogen gas was flowed as a carrier gas at a flow rate of 200 mL/min, and the measurement time was 30 minutes. Chem-Aqua was used as the Karl Fischer reagent. The sample amount was 1.5 g.

### [PTFE fibril diameter (median value)]

(1) Using a scanning electron microscope (Model S-4800, manufactured by Hitachi, Ltd.), an enlarged photograph (7,000×) of the sheet-shaped solid-state electrolyte layers was taken to obtain an image.
(2) Two lines equidistant from each other were drawn on the image in the horizontal direction to divide the image into three equal parts.
(3) The diameter of each PTFE fiber on the upper straight line was measured at three locations, and the average value was taken as the PTFE fiber diameter. The three locations to be measured were the intersection between the PTFE fiber and the straight line, and the locations 0.5 µm above and below the intersection (PTFE primary particles not formed into fibrils were excluded).
(4) The task of (3) above was then carried out for all the PTFE fibers on the lower straight line.
(5) Starting from the first image, the sheet-shaped solid-state electrolyte layers was moved 1 mm in the right direction of the screen, photographed again, and the diameter of the PTFE fibers was measured according to the above (3) and (4). This was repeated until the number of fibers measured exceeded 80, and then the measurement was terminated.
(6) The median value of the diameters of all the PTFE fibers measured above was taken as the size of the fibril diameter.

### [Electrical conductivity of solid-state electrolyte]

Electrical conductivity was measured by the following method.

A gold electrode was formed on the surface of the produced solid-state electrolyte sheet by sputtering, and then punched to a diameter of 10 mm. The electrode was then sandwiched between stainless steel current collectors to form a cell for measurement. This cell was subjected to AC impedance measurement in a frequency range of 0.1 Hz to 8 MHz using an impedance analyzer (Model 1260 manufactured by Solartron) in a dry argon atmosphere to determine the electrical conductivity. The value of Comparative Example 1 was standardized as 100%.

### [Flexibility evaluation]

A 2 cm long and 6 cm wide test piece was cut from the produced solid-state electrolyte sheet. The test piece was wound around a round bar with a diameter of 4 mm, and then visually observed and evaluated according to the following criteria. Cases in which damage or cracks were not observed were evaluated as "pass" (circle), and cases in which cracks were observed were evaluated as "fail" (cross).

### [Strength measurement]

Using a digital force gauge (ZTS-20N manufactured by Imada), the strength of a strip-shaped electrode mixture test piece with a width of 4 mm under the condition of 100 mm/min was measured. The chuck-to-chuck distance was 30 mm. Displacement was applied until breakage, and the maximum stress obtained in the measured results was taken as the strength of each sample. The value of Comparative Example 1 was standardized as 100%.

The test results are shown in Table 2.

**[Table 2]**

| | Binder | Fibril diameter [nm] | Evaluations | | |
|---|---|---|---|---|---|
| | | | Electrical conductivity | Flexibility | Strength |
| Example 1 | PTFE-1 | 47 | 220 | pass | 172 |
| Example 2 | PTFE-2 | 37 | 210 | pass | 139 |
| Example 3 | PTFE-3 | 42 | 210 | pass | 160 |
| Example 4 | PTFE-4 | 23 | 140 | pass | 124 |
| Example 5 | PTFE-2 | 37 | 180 | pass | 136 |
| Comparative 1 Example | PTFE-1 | 71 | 100 | fail | 100 |
| Comparative 2 Example | PTFE-4 | 76 | 150 | fail | 80 |
| Reference 1 Example | VdF/HFP | - | 70 | pass | - |

From the results in Table 2, the sheet-shaped solid-state electrolyte layers of the Examples had excellent physical properties.

### Industrial Applicability

The all-solid-state secondary battery mixture of the present disclosure and the all-solid-state secondary battery mixture sheet containing the all-solid-state secondary battery mixture can be used to produce an all-solid-state secondary battery.

## Claims

1. An all-solid-state secondary battery mixture, comprising a solid-state electrolyte and a binder, wherein
the binder is a polytetrafluoroethylene resin, and
the polytetrafluoroethylene resin has a fibrous structure with a fibril diameter (median value) of 70 nm or less.

2. The all-solid-state secondary battery mixture according to claim 1, which is for a lithium ion all-solid-state secondary battery.

3. The all-solid-state secondary battery mixture according to claim 1 or 2, which is for a sulfide-based all-solid-state secondary battery.

4. The all-solid-state secondary battery mixture according to claim 1, obtained using a raw material composition containing a solid-state electrolyte and a binder, wherein
the binder in the raw material composition is a powdered polytetrafluoroethylene resin.

5. The all-solid-state secondary battery mixture according to claim 4, wherein the raw material composition is substantially free of a liquid medium.

6. The all-solid-state secondary battery mixture according to claim 4 or 5, wherein the powdered polytetrafluoroethylene resin has a moisture content of 500 ppm or less.

7. The all-solid-state secondary battery mixture according to claim 4, 5, or 6, wherein the powdered polytetrafluoroethylene resin has a standard specific gravity of 2.12 to 2.18.

8. The all-solid-state secondary battery mixture according to claim 4, 5, 6, or 7, wherein the powdered polytetrafluoroethylene resin includes 50% by mass or more of a polytetrafluoroethylene resin having a secondary particle size of 500 µm or more.

9. The all-solid-state secondary battery mixture according to claim 4, 5, 6, or 7, wherein the powdered polytetrafluoroethylene resin includes 80% by mass or more of a polytetrafluoroethylene resin having a secondary particle size of 500 µm or more.

10. An all-solid-state secondary battery mixture sheet comprising the all-solid-state battery mixture according to any one claim of claims 1 to 9.

11. A method for producing an all-solid-state secondary battery sheet comprising:
(1) applying a shear force while mixing a raw material composition including a solid-state electrolyte and a binder;
(2) forming the all-solid-state secondary battery mixture obtained in (1) into a bulk shape; and
(3) rolling the bulk-shape all-solid-state secondary battery mixture obtained in (2) into a sheet shape,
wherein the binder is a powdered polytetrafluoroethylene resin.

12. An all-solid-state secondary battery comprising the all-solid-state secondary battery mixture sheet according to claim 10.
